# EUROPEAN PATENT SPECIFICATION

(11) **EP 1 986 504 B1**
(45) Date of publication and mention of the grant of the patent: **08.06.2011**
(21) Application number: 06723018.5
(22) Date of filing: 07.02.2006
(51) Int. Cl.: A23G 4/00

(54) **CHEWING GUM COMPRISING NUT PIECES**
NUSS-STÜCKCHEN ENTHALTENDES KAUGUMMI
GOMME À MÂCHER COMPRENANT DES MORCEAUX DE NOIX

(43) Date of publication of application: 05.11.2008
(73) Proprietor: Cadbury Holdings Limited, Uxbridge, Middlesex UB8 1DH (GB)
(72) Inventor: PORSGAARD, Tania, Kjølhede, DK-8220 Brabrand (DK)
(74) Representative: Plougmann & Vingtoft A/S
(86) International application number: PCT/EP2006/001175
(87) International publication number: WO 2007/090426

(56) References cited:
- AT-B- 390 354
- GB-A- 2 393 392
- US-A- 3 205 075
- US-A1- 2004 028 622
- PATENT ABSTRACTS OF JAPAN vol. 006, no. 135 (C-115), 22 July 1982 (1982-07-22) & JP 57 058854 A (LOTTE CO LTD), 8 April 1982 (1982-04-08)
- PATENT ABSTRACTS OF JAPAN vol. 010, no. 226 (C-364), 7 August 1986 (1986-08-07) & JP 61 063245 A (TAKAMI SATO), 1 April 1986 (1986-04-01)

## Description

### FIELD OF THE INVENTION

The present invention relates to a chewing gum comprising nut pieces. The invention furthermore relates to methods of preparing the chewing gum, and to uses of nut pieces in chewing gum.

### TECHNICAL BACKGROUND OF THE INVENTION

Nut pieces are interesting components from a nutritional and medical point of view. Nuts contain amino acids many of which are vital for the proper functioning, growth and development of the human body. Walnuts, for instance, are rich in the nine amino acids that cannot be produced by the body, but which must be consumed in the diet (known as the essential amino acids). The non-essential amino acid arginine also abundant in many nuts, helps the body synthesize nitric oxide which widens and relaxes blood vessels, thus cutting the risk of blood clots that can lead to heart attacks. In addition, the content of healthy oils in nuts is interesting from a nutritional and medical point of view.

In the prior art it is suggested to incorporate different kinds of processed nut products, such as defatted or partially defatted nut flour or nut oil, in chewing gum, but many attempts have failed due to the disintegration of the chewing gum, i.e. the chewing gum falls into pieces or the chewing gum is becoming too soft.

The prior art attempted to overcome this problem by using only small amounts of defatted nut or partially defatted nut flour as well as small amounts of nut oil. As a consequence, the nutritional and medical value of the nut is decreased as only a part of the components of the nut, such as the oil content or the content of defatted nut flour, is incorporated into the chewing gum. In addition, only a small amount of the nut product may be incorporated into the chewing gum if an acceptable texture of the chewing gum is still to be maintained, due to the disintegration problems, without being obliged to compensate by adjusting the content of the other components of the chewing gum, such as the gum base system.

For example, in US 2004 0107971 a gum based chewing product is disclosed containing a synthetic or natural betel nut source, an alkaloid-like composition such as nicotine or other such alkaloids like caffeine, theine etc. from natural or synthetic origin for its source. In particular there is disclosed a gum based product comprising among other ingredients 1.5-9% by weight of betel nut powder.

WO 04/014 348 discloses the use of defatted and partially defatted nut flour in chewing gum.

### SUMMARY OF THE INVENTION

Accordingly, in one aspect of the invention there is provided a chewing gum comprising
- at least one chewing gum ingredient,
- gum base in the range of 20-70% by weight of the uncoated chewing gum, and
- nut pieces in an amount of 10% to 50% by weight of the uncoated chewing gum,
wherein the nut pieces are obtained from a non-euphoriant nut, and
wherein the nut pieces have an average size of at least 750 µm, and
wherein at least the content of fat in the nut pieces deviates at the most 10% from the normal content of fat in the nut from which it has been obtained.

In a further aspect of the invention there is provided a method of preparing the above mentioned chewing gum, comprising the steps of mixing the at least one chewing gum ingredient, gum base, and nut pieces, and shaping the mix to obtain the chewing gum.

A further aspect of the present invention relates to the use of non-euphoriant nut pieces in an amount of 10% to 50% by weight of the uncoated chewing gum as a softener in chewing gum comprising gum base in the range of 20-70% by weight of the uncoated chewing gum, wherein at least the content of fat in the nut pieces deviates at the most 10% from the normal content of fat in the nut from which it has been obtained, and wherein the nut pieces have an average size of at least 750 µm.

### DETAILED DISCLOSURE OF THE INVENTON

The present invention relates to a chewing gum comprising nut pieces, such as nut pieces originating from different kinds of nuts. By incorporating nut pieces in a chewing gum according to the invention, both the healthy oils and the valuable nutrients, such as minerals, vitamins and essential amino acids, are maintained. Thus, the invention benefits from the advantages of both the oils and the valuable nutrients at the same time.

Accordingly, the chewing gum according to the invention comprises achewing gum comprising
- at least one chewing gum ingredient,
- gum base in the range of 20-70% by weight of the uncoated chewing gum, and
- nut pieces in an amount of 10% to 50% by weight of the uncoated chewing gum,
wherein the nut pieces are obtained from a non-euphoriant nut, and
wherein the nut pieces have an average size of at least 750 µm, and
wherein at least the content of fat in the nut pieces deviates at the most 10% from the normal content of fat in the nut from which it has been obtained.

In the present context, the term "nuts" is used in its conventional meaning and thus relates to any seed or fruit having an edible kernel surrounded by a hard or brittle covering. Some of these nuts are in a botanical sense true nuts, such as hazelnuts, others are drupes, such as almond, macadamia nut, pecan and walnut, seeds such as Brazil, and legumes such as peanut.

Only the edible kernel of the nuts is of interest in the present invention. However, in some nuts, such as almonds and pecan, a very thin skin/shell (endocarp) surrounds the edible kernel. Thus, when the word "whole nut" is used in the preset context, both the edible kernel together with the thin skin or endocarp is meant, but without the dry and subcoriaceous exocarp. This skin or endocarp is of special interest as it contains high amounts of nutrients such as polyphenols. In fact the content of polyphenols is about 9-10 times higher in the shell or endocarp than in the kernel.

In preferred embodiments, the nut from which the nut pieces have been obtained is selected from the group consisting of an almond, a hazelnut, a walnut, a pecan nut, a peanut, and a macadamia nut, a cashew, a pine nut, a brazil nut, a pistachio, or a mixture thereof. In a specific embodiment, the nut from which the nut pieces have been obtained is an almond. In a further embodiment, the nut from which the nut pieces have been obtained is a hazelnut. In a useful embodiment, the nut from which the nut pieces have been obtained is a walnut. One advantage of using nut pieces, such as nut pieces from different types of nuts, is that chewing gums with new flavour profiles, superior mouth feel, and with nutritional, therapeutic and pharmacological properties are obtained.

One common feature of all these nuts, and thus the nuts from which the nut pieces useful in the present invention are obtained, is that they belong to the group of non-euphoriant nuts. In the present context, the expression "non-euphoriant nuts" relates to nuts that tend not to produce euphoria, such as a feeling of great happiness or well-being. Examples of euphoriant nuts include betel nut (*Areca nut*) and Kola nut. Such euphoriant nuts are not useful in the present invention.

In a preferred embodiment, the nut, from which the nut pieces have been obtained, is a whole nut as defined above.

Any of the means known in the art may be used for the comminution of the whole nuts to an acceptable particle size. A preferred method is to use a cutting-type machine with rotating knives since the particles seem to have sharper edges and tend to bind better than other particle shapes. One advantage of the present invention is that the nut, from which the nut pieces have been obtained, need not to undergo any processing prior or subsequent to the comminuation, but may be used as raw and/or untreated material. Thus, in a preferred embodiment, the nut, from which the nut pieces have been obtained, does not undergo tempering prior to comminution. In accordance with a further useful embodiment, the nut, from which the nut pieces have been obtained, does not undergo additional substantial processing except from comminution. The nut, from which the nut pieces have been obtained, does not undergo refinement, such as a defat-process by use of mechanically pressing the raw nut.

The nuts or nut pieces useful in the present invention may be further characterized by their content of protein, carbohydrate and fat. A number of nuts are listed in Table A with their normal content range of protein, fat, carbohydrate and water. In the present context, the term "fat" relates to the total amount of triglycerides in the nut or nut pieces and also encompasses nut oils comprised by the nut or nut pieces.

In accordance with the present invention, at least the content of fat in the nut pieces is essentially similar to the content of fat in the nut from which it has been obtained i.e., the content of fat in the nut pieces deviates at the most 10% from the normal content range of fat in the nut from which it has been obtained. The "normal content range" of fat in a nut can be seen in Table A. Accordingly, the fat content in hazelnut pieces is essentially similar to the content of fat in the hazelnut from which the pieces have been obtained, when the fat content of the pieces is at the most 10% higher or at the most 10% lower than the range from 45.0 to 61.8 g fat/100g nut. Thus, the fat content of hazelnut pieces is essentially similar to the content of fat in the hazelnut from which the pieces have been obtained when the pieces have a fat content between 40.5 and 67.98 g fat/100g hazelnut. Preferably, the deviation is at the most 5%, such as at the most 2% including at the most 1%. The same applies to the content of carbohydrate, protein and water.

Accordingly, in a preferred embodiment, the chewing gum is one wherein the content of water, protein, fat and carbohydrate in the nut pieces deviates at the most 10%, such as at the most 5%, such as at the most 2%, including at the most 1%, from the normal content range of water, protein, fat and carbohydrate in the nut from which it has been obtained.

In a preferred embodiment, the content of water in the nut pieces is essentially similar to the content of water in the nut from which it has been obtained.

In a further preferred embodiment, the content of carbohydrate in the nut pieces is essentially similar to the content of carbohydrate in the nut from which it has been obtained.

**Table A. Normal content range of water, protein, fat and carbohydrate in nuts**

| **Nut species** | **Water, g** | **Protein, total, g** | | **Fat, total, g** | | **Carbohydrate, total, g** | |
|---|---|---|---|---|---|---|---|
| | **content** | **content** | **variation** | **content** | **variation** | **content** | **variation** |
| Hazelnut, dried | 4.1 | 14.9 | 13.8-15.6 | 54.4 | 45.0-61.8 | 29.3 | 24.7-32.1 |
| Walnut | 2.8 | 14.3 | 13.6-15.0 | 64.3 | 63.0-37.0 | 16.2 | 13.3-19.1 |
| Peanut, dried | 6.7 | 24.9 | 23.8-26.0 | 42.7 | 37.3-49.9 | 28.4 | 26.6-30.2 |
| Almond, raw | 8.0 | 20.5 | 20.1-20.8 | 39.1 | 36.0-42.2 | 29.5 | 24.7-34.3 |
| Pistachio nut, | 3,9 dried | 20,6 | 19,0-22,2 | 48,4 | 45,6-51,2 | 24,8 | |
| Pecans, dried | 4,8 | 7,7 | 6,8-8,7 | 67,6 | 64,8-70,5 | 18,2 | |
| Cashew nut, dry roasted | 1,7 | 15,3 | | 46,3 | | 32,7 | |
| Macadamias | | 9,27 | | 76,4 | | 10,0 | |

In a useful embodiment, the chewing gum according to the invention is one wherein the content of constituents in the nut pieces are essentially similar to the content of constituents in the nut from which they have been obtained. Examples of such constituents are amino acids such as arginine, Isoleucine, leucine, lysine, methionine, cystine, phenylalanine, tyrosine, threonin, tryptofane, valine, arginine, histidine, alanine, aspartic acid, glutamic acid, glycine, proline, and serine, vitamins such as vitamin A, vitamin B, vitamin C, vitamin D, vitamin E and vitamin K, and minerals such as sodium, potassium, calcium, magnesium, phosphor, iron, copper, zinc, iodine, manganese, chrom, selenium, and nickel, as well as polyphenols and triterpenoid saponins. The polyphenols are typically catechins; leucoanthocyanidins and flavanones; flavanins, flavones and anthocyanins; flavonols; flavonolignans; and oligomers thereof.

The chewing gum according to the invention may in a preferred embodiment be one wherein the contents of water, protein, carbohydrate and arginine of the nut pieces are essentially similar to the contents of water, protein, and carbohydrate in the nut from which it has been obtained.

In useful embodiments, the nut or the nut pieces furthermore comprise at least 5% protein by weight of the total weight of the nut or nut pieces, preferably at least 7.5% protein by weight of the nut or nut pieces, and even more preferably at least 10% protein by weight of the total weight of the nut or nut pieces. In further embodiments, the nut or the nut pieces comprise protein in the range 5-20% by weight of the total weight of the nut or nut pieces, preferably in the range 7.5-17.5% by weight of the total weight of the nut or nut pieces, and even more preferred in the range 10-16% by weight of the total weight of the nut or nut pieces.

In useful embodiments, the nut or nut pieces furthermore comprise at least 10% carbohydrate by weight of the total weight of the nut or nut pieces, preferably at least 20% carbohydrate by weight of the total weight of the nut or nut pieces, and even more preferably at least 25% carbohydrate by weight of the total weight of the nut or nut pieces. In further embodiments, the nut or nut pieces comprise carbohydrate in the range 10-60% by weight of the total weight of the nut or nut pieces, preferably in the range 15-50% by weight of the total weight of the nut or nut pieces, and even more preferred in the range 20-40% by weight of the total weight of the nut or nut pieces.

In referred embodiments, the nut or nut pieces furthermore comprise at least 10% fat by weight of the total weight of the nut or nut pieces, preferably at least 20% fat by weight of the total weight of the nut or nut pieces, such as at least 20% fat by weight, and even more preferably at least 50% fat by weight of the total weight of the nut or nut pieces. Furthermore, the nut or the pieces comprise fat in the range 10-70% by weight of the total weight of the nut or nut pieces, preferably in the range 30-65% by weight of the total weight of the nut or nut pieces, and even more preferred in the range 40-65% by weight of the total weight of the nut or nut pieces.

In useful embodiments, the nut or the nut pieces furthermore comprise at least 0.01% water by weight of the total weight of the nut or nut pieces, preferably at least 0.1% water by weight of the total weight of the nut or nut pieces, and even more preferably at least 1% water by weight of the total weight of the nut or nut pieces, such as at least 2% water by weight of the total weight of the nut or nut pieces. In preferred embodiment, the nut or nut pieces furthermore comprise at most 15% water by weight of the total weight of the nut or nut pieces, preferably at most 10% water by weight of the total weight of the nut or nut pieces, and even more preferably at most 5% water by weight of the total weight of the nut or nut pieces, such as at most 2% water by weight of the total weight of the nut or nut pieces. In further embodiments, the nut or nut pieces comprise water in the range 0.1-15% by weight of the total weight of the nut or nut pieces, preferably in the range 1-10%, and even more preferred in the range 2-8% by weight of the total weight of the nut or nut pieces.

In useful embodiments, the nut or nut pieces furthermore comprise at least 0.001% arginine by weight of the total weight of the nut or nut pieces, preferably at least 0.05% arginine by weight of the total weight of the nut or nut pieces, and even more preferably at least 0.01% arginine by weight of the total weight of the nut or nut pieces, such as at least 0.02% arginine by weight of the total weight of the nut or nut pieces. In preferred embodiments, the nut or nut pieces comprise arginine in the range 0.001-0.1% by weight of the total weight of the nut or nut pieces, preferably in the range 0.005-0.07% by weight of the total weight of the nut or nut pieces, and even more preferred in the range 0.001-0.005% by weight of the total weight of the nut or nut pieces.

In an interesting embodiment, the nut or nut pieces in the chewing gum of the present invention comprise protein in the range 5-20% by weight of the total weight of the nut or nut pieces, carbohydrate in the range 10-60% by weight of the total weight of the nut or nut pieces, and arginine in the range 0.001-0.1% by weight of the total weight of the nut or nut pieces.

The chewing gum may be characterized by having a consumer acceptable texture, which Implies a good, smooth, soft and chewy texture, with a continuous even surface and in some instance discrete, visually-apparent pieces of nut are visible on the surface of the gum. The size of these visually apparent pieces of nut will vary depending upon the size of the nut pieces used. There is a practical limit on the size of the pieces of nut which may be incorporated if an acceptable chewing gum is to be produced, but in general large pieces .. are desirable.

The average size of the nut pieces is at least at 750 µm, including at least 800 µm, such as at least 850 µm, e.g. at least 1000 µm, including an average size of the nut pieces of at least'1250 µm.

It will be understood that the average size of a nut pieces is measured as the length of the longest dimension of the pieces.

In accordance with the present invention, the nut pieces may be prepared by a standard method such as grinding, milling or slicing, adjusted in order to ensure the desired comminution of the nut.

It is a beneficial feature of the invention that it is possible to incorporate a large amount of nut pieces in the chewing gum, while maintaining a good and smooth texture without any disintegration. Furthermore, the chewing gum has an increased nutritional and therapeutic value compared to chewing gums comprising defatted or partially defatted nut flour.

It is preferred to incorporate as many nut pieces as possible in the chewing gum, such as if high contents of oils and nutrients are preferred. Accordingly, the chewing gum comprises an amount of nut pieces in the range 10% to 50% by weight of the uncoated chewing gum. In still further embodiments, the chewing gum comprises an amount of nut pieces in the range 12% to 50% by weight of the uncoated chewing gum. In useful embodiments, the chewing gum comprises an amount of nut pieces in the range 15% to 50% by weight of the uncoated chewing gum.

In accordance with the present invention, the chewing gum comprises, besides nut pieces and at least one chewing gum ingredient, a gum base. Typically, a useful gum base comprises several elements such as an elastomer, a resin, a softener and a filler. One advantage of the present invention is that there is no need to adjust the content of other chewing gum ingredients in order to maintain the desired texture. Furthermore, no disintegration of the chewing gum occurs even when large amount of nuts are applied.

In useful embodiments, the chewing gum according to the invention comprises gum base in the range 20-70% by weight, and even more preferably in the range 30-60% by weight of the uncoated chewing gum.

In a preferred embodiment, the gum base of the chewing gum may comprise an elastomer. Natural elastomers may include natural rubber such as smoked or liquid latex and guayule as well as natural gums such as jelutong, lechi caspi, massaranduba balata, sorva, perillo, rosindinha, massaranduba chocolate, chicle, nispero, gutta hang kang, and combinations thereof. Useful synthetic elastomers include, but are not limited to synthetic elastomers listed in U.S. Food and Drug Administration, CFR, Title 21, Section 172,615, the Masticatory Substances, Synthetic, ) such as polyisobutylene. e.g. having an average molecular weight in the range of about 10,000 to 1,000,000 including the range of 50,000 to 80,000, isobutylene-isoprene copolymer (butyl elastomer), styrene- butadiene copolymers e.g. having styrene-butadiene ratios of about 1:3 to 3:1, polyvinyl acetate (PVA), e.g. having a average molecular weight in the range of 2,000 to 90,000 such as the range of 3,000 to 80,000 including the range of 30,000 to 50,000, where the higher molecular weight polyvinyl acetates are typically used in bubble gum base, polyisoprene, polyethylene, vinyl acetate-vinyl laurate copolymer e.g. having a vinyl laurate content of about 5 to 50% by weight such as 10 to 45% by weight of the copolymer and combinations hereof.

It is possible to combine a synthetic elastomer having a high molecular weight and a synthetic elastomer having a low molecular weight elastomer in a gum base. Presently preferred combinations of synthetic elastomers include, but are not limited to, polyisobutylene and styrene-butadiene, polyisobutylene and polyisoprene, polyisobutylene and isobutylene-isoprene copolymer (butyl rubber) and a combination of polyisobutylene, styrene-butadiene copolymer and isobutylene isoprene copolymer, and all of the above individual synthetic polymers in admixture with polyvinyl acetate, vinyl acetate-vinyl laurate copolymers, respectively and mixtures thereof.

Typically, the gum base comprises at least one elastomer in an amount in the range of 3-80% by weight of the gum base, preferably in an amount in the range of 4-60% by weight of the gum base, and even more preferred in the range of 5-40% by weight of the gum base, such as in the range of 8-20% by weight of the gum base.

In preferred embodiments, the gum base of the chewing gum may comprise one or more resins contributing to obtain the desired masticatory properties and acting as plasticizers for the elastomers of the gum base. The resin may be a natural resin and/or it may be a synthetic resin. In the present context, useful resins include, but are not limited to, natural rosin esters, often referred to as ester gums including as examples glycerol esters of partially hydrogenated rosins, glycerol esters of polymerised rosins, glycerol esters of partially dimerised rosins, glycerol esters of tally oil rosins, pentaerythritol esters of partially hydrogenated rosins, methyl esters of rosins, partially hydrogenated methyl esters of rosins and pentaerythritol esters of rosins. Other useful resinous compounds include synthetic resins such as terpene resins derived from alpha-pinene, beta-pinene, and/or d-limonene, natural terpene resins; and any suitable combinations of the foregoing. The choice of resins will vary depending on the specific application, and on the type of elastomer(s) being used.

Usually, the gum base comprises at least one resin in an amount in the range of 10-90% by weight of the gum base, preferably in the range of 20-80% by weight, even more preferred in the range of 30-70% by weight of the gum base, such as in the range of 40-60% by weight of the gum base.

The gum base may furthermore comprise one or more softener. According to the present text, the term "softener" may be used interchangeably with plasticizers and plasticizing agents, and is used for ingredients, which softens the gum or chewing gum formulation and encompass wax, fat, oil, emulsifiers, surfactants, solubilizers etc. The softeners may also include sucrose polyesters, such as glycerin, lecithin, and combinations thereof. Aqueous sweetener solutions such as those containing sorbitol, hydrogenated starch hydrolysates, corn syrup and combinations thereof, may also be used as softeners and binding agents in the chewing gum according to the invention.

Typically, the softener constitutes between approximately 0.5 to about 30% by weight of the gum base. However, the inventors of the present invention found, that the incorporation of nut pieces in the chewing gum under some circumstances can reduce the amount of softener or renders the use of softener superfluously, due to the fat content of the nut pieces. It will thus be understood, that it may be appropriate to reduce the amount of softener, compared to the normal used level of softener, when using nut pieces with a high fat content, and vice versa, increase, compared to the normal used level of softener, the amount of softener when using nut pieces with a low level of fat. For example, when using a nut piece having 15 % fat by weight of the nut piece it may be appropriate only to incorporate 1% % softener by weight of the gum base in the gum base.

Accordingly, in a preferred embodiment, the gum base comprise a softener in an amount in the range of 0% - 20% by weight of the gum base. In useful embodiments, the gum base comprises a softener in an amount in the range of 0,5% - 20% by weight of the gum base, such as in the range of 0,5% - 10% by weight, e.g. in the range of 1% - 10% by weight, including 1% - 15% by weight of the gum base. In a useful embodiment, the gum base used in the chewing gum of the present invention does not comprise a softener.

In a preferred embodiment, the gum base comprises an emulsifier, which aid in dispersing any immiscible components into a single stable system. The emulsifiers useful in this invention include glyceryl monostearate, lecithin, fatty acid monoglycerides, diglycerides, propylene glycol monostearate, and the like, and mixtures thereof. The emulsifier may be employed in an amount in the range of 1-15% by weight of the gum base, and preferably in the range 5-10% by weight of the gum base.

Further examples of useful emulsifier include anionic, cationic, amphoteric or non-ionic emulsifiers can be used. Suitable emulsifiers include lecithins, polyoxyethylene stearate, polyoxyethylene sorbitan fatty acid esters, fatty acid salts, mono and diacetyl tartaric acid esters of mono and diglycerides of edible fatty acids, citric acid esters of mono and diglycerides of edible fatty acids, saccharose esters of fatty acids, polyglycerol esters of fatty acids, polyglycerol esters ofinteresterified castor oil acid (E476), sodium stearoyllatylate, sodium lauryl sulfate and sorbitan esters of fatty acids and polyoxyethylated hydrogenated castor oil (e.g. the product sold under the trade name CREMOPHOR), block copolymers of ethylene oxide and propylene oxide (e.g. products sold under trade names PLURONIC and POLOXAMER), polyoxyethylene fatty alcohol ethers, polyoxyethylene sorbitan fatty acid esters, sorbitan esters of fatty acids and polyoxyethylene steraric acid esters.

Particularly suitable emulsifiers are polyoxyethylene stearates, such as for instance polyoxyethylene (8) stearate and polyoxyethylene (40) stearate, the polyoxyethylene sorbitan fatty acid esters sold under the trade name TWEEN, for instance TWEEN 20 (monolaurate), TWEEN 80 (monooleate), TWEEN 40 (monopalmitate), TWEEN 60 (monostearate) or TWEEN 65 (tristearate), mono and diacetyl tartaric acid esters of mono and diglycerides of edible fatty acids, citric acid esters of mono and diglycerides of edible fatty acids, sodium stearoyllactylate, sodium laurylsulfate, polyoxyethylated hydrogenated castor oil, blockcopolymers of ethylene oxide and propyleneoxide and polyoxyethylene fatty alcohol ether. The emulsifiers may either be a single compound or a combination of several compounds.

Some emulsifier; also referred to as plasticizers, to provide a variety of desirable textures and consistency properties. Because of the low molecular weight of these components, the plasticizers are able to penetrate the fundamental structure of the gum base making it plastic and less viscous. Useful plasticizers include lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, and mixtures thereof.

In preferred embodiments, the softener used in the gum base of the chewing gum of the invention is a fat. The fat may e.g. include partially or fully hydrogenated vegetable or animal fats, such as partially or fully hydrogenated coconut oil, partially or fully hydrogenated palm oil, partially or fully hydrogenated palm kernel oil, partially or fully hydrogenated rapeseed oil, partially or fully hydrogenated castor oil, partially or fully hydrogenated maize oil, partially or fully hydrogenated cottonseed oil, partially or fully hydrogenated olive oil, partially or fully hydrogenated sunflower oil, partially or fully hydrogenated safflower oil, partially or fully hydrogenated sesame oil, partially or fully hydrogenated soybean oil, partially or fully hydrogenated beef tallow, and partially or fully hydrogenated lard, and any mixture thereof. In useful embodiments, the gum base comprises a fat in an amount in the range of 1-15% by weight of the gum base, and preferably in the range 5-10% by weight of the gum base.

The gum base may furthermore comprise a wax. When a wax is present in the gum base, it softens the polymeric elastomer mixture and improves the elasticity of the gum base.

The waxes employed will have a melting point below about 60°C, and preferably between about 45°C and about 55°C. The low melting wax may be a paraffin wax. The wax may be present in the gum base in an amount from about 6% to about 10%, and preferably from about 7% to about 9.5% by weight of the gum base.

In addition to the low melting point waxes, waxes having a higher melting point may be used in the gum base in amounts up to about 5%, by weight of the gum base. Such high melting waxes include beeswax, vegetable wax, candelilla wax, canauba wax, most petroleum waxes, and mixtures thereof.

Further useful waxes include natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, may also be incorporated into the gum base.

Anhydrous glycerin may also be employed as a softening agent, such as the commercially available United States Pharmacopeia (USP) grade. Glycerin is a syrupy liquid with a sweet warm taste and has a sweetness of about 60% of that of cane sugar. Because glycerin is hygroscopic, the anhydrous glycerin may be maintained under anhydrous conditions throughout the preparation of the chewing gum composition.

In an embodiment of the invention, the gum base comprises at least one resin in an amount in the range of 10-90% by weight of the gum base, at least one elastomer in an amount in the range of 4-60% by weight of the gum base, and an emulsifier in an amount in the range of 1-15% by weight. Preferably, the gum base comprises at least one resin in an amount in the range of 30-70% by weight of the gum base, at least one elastomer in an amount in the range of 5-40% by weight of the gum base, and an emulsifier in an amount in the range of 5-10% by weight of the gum base.

In a preferred embodiment, the gum base of the chewing gum according to the invention comprises a filler. The fillers/texturizers may include magnesium and calcium carbonate, sodium sulphate, ground limestone, silicate types such as magnesium and aluminium silicate, kaolin, clay, aluminium oxide, silicium oxide, talc, titanium oxide, mono-, di- and tri-calcium phosphates, cellulose polymers, such as wood, and combinations thereof.

The fillers/texturizers may also include natural organic fibres such as fruit vegetable fibres, grain, rice, cellulose and combinations thereof.

In accordance with the present invention the chewing gum comprises at least one chewing gum ingredient.

Such a chewing gum ingredient may be selected from the group consisting least a bulk sweetener, a high intensity sweetener, a flavouring agent, a cooling agent, a warming agent, a softener, an emulsifier, a colouring agent, a binding agent, an acidulant, a filler, an antioxidant.

In a useful embodiment of the present invention, the at least one chewing gum ingredient is a bulk sweetener. The bulk sweetener may be selected from the group consisting of monosaccharides, disaccharides, polysaccharides, sugar alcohols, and mixtures thereof; randomly bonded glucose polymers such as those polymers distributed under the tradename POLYDEXTROSE by Pfizer, Inc., Groton, Conn.; isomalt (a racemic mixture of alpha-D-glucopyranosyl-1,6-mannitol and alpha-D-glucopyranosyl-1,6-sorbitol manufactured under the tradename PALATINIT by Suddeutsche Zucker), maltodextrins; hydrogenated starch hydrolysates; hydrogenated hexoses; and hydrogenated disaccharides.

Furthermore, the bulk sweetener may be selected from the group consisting of dextrose, sucrose, lactose, hydrogenated starch hydrolysates, xylitol, mannitol, sorbitol, mannitol, maltitol, isomaltol, erythritol, lactitol, maltodextrin, and cyclodextrin.

In an especially preferred embodiment of the invention, the bulk sweetener is present in an amount ranging from 10-70% by weight of the uncoated chewing gum. This embodiment has the distinct advantage that the bitter taste, which may be associated with some of the useful nuts, is efficiently masked.

The bulk sweetener may be present in amount ranging from 30-70% by weight of the uncoated chewing gum, such as e.g. in the range 35-65% by weight of the chewing gum, and in the range 40-60% by weight of the chewing gum. For example, the bulk sweetener may be present in amount ranging from 20-55% by weight of the chewing gum, such as e.g. in amount ranging from 30-50% by weight of the chewing gum.

In interesting embodiment, the chewing gum according to the invention further comprising a high intensity sweetener. Useful high intensity sweetener may be selected from the group consisting of sucralose, neotame, NEPH, aspartame, salts of acesulfame, alitame, saccharin and its salts, cyclamic acid and its salts, glycyrrhizin, dihydrochalcones, thaumatin, monellin, stevioside, and combinations thereof.

Flavouring agents may also be useful for the organoleptic properties in the chewing gum according to the invention. The flavouring agents which may be used include those flavouring agents known to the skilled artisan, such as natural and artificial flavouring agents. These flavouring agents may be chosen from synthetic flavour oils and flavouring aromatics and/or oils, oleoresins and extracts derived from plants, leaves, flowers, fruits, and so forth, and combinations thereof. Non-limiting representative flavour oils include spearmint oil, cinnamon oil; oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavouring agents are artificial, natural and synthetic fruit flavours such as vanilla, and citrus oils including lemon, orange, lime, grapefruit, and fruit essences including apple, pear, peach, grape, strawberry, raspberry, cherry, plum, pineapple, apricot and so forth. These flavouring agents may be used in liquid or solid form and may be used individually or in admixture. Commonly used flavouring agents include mints such as peppermint, menthol, spearmint, artificial vanilla, cinnamon derivatives, and various fruit flavouring agents, whether employed individually or in admixture.

Other useful flavouring agents include aldehydes and esters such as cinnamyl acetate, cinnamaldehyde, citral diethylacetal, dihydrocarvyl acetate, eugenyl formate, p-methylamisol, and so forth may be used. Generally any flavouring agent or food additive such as those described in Chemicals Used in Food Processing, publication 1274, pages 63-258, by the National Academy of Sciences, may be used.

Further examples of aldehyde flavouring agents include, but are not limited to, acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillin (vanilla, cream), alpha-amyl cinnamaldehyde (spicy fruity flavours), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, and mixtures thereof.

In some embodiments, the flavouring agent may be employed in either liquid form and/or dried form. When employed in the latter form, suitable drying means such as spray drying the oil may be used. Alternatively, the flavouring agent may be absorbed onto water soluble materials, such as cellulose, starch, sugar, maltodextrin, gum arabic and so forth or may be encapsulated. The actual techniques for preparing such dried forms are well-known.

In some embodiments, the flavouring agents may be used in many distinct physical forms well-known in the art to provide an initial burst of flavour and/or a prolonged sensation of flavour. Without being limited thereto, such physical forms include free forms, such as spray dried, powdered, beaded forms, encapsulated forms, and mixtures thereof.

The amount of flavouring agent employed herein may be a matter of preference subject to such factors as the type of final chewing gum, the individual flavour, the gum base employed, and the strength of flavour desired. Thus, the amount of flavouring may be varied in order to obtain the result desired in the final product and such variations are within the capabilities of those skilled in the art without the need for undue experimentation. In chewing gum compositions, the flavouring agent is generally present in amounts from about 0.02% to about 5% by weight, and more specifically from about 0.1% to about 2% by weight, and even more specifically, from about 0.8% to about 1.8%, by weight of the uncoated chewing gum.

Useful cooling agents are mentioned in U.S. Patent No. 6,627,233. Particular examples of cooling agents include: menthol, xylitol, menthane, menthone, menthyl acetate, menthyl salicylate, N,2,3-trimethyl-2-isopropyl butanamide (WS-23), substituted p-menthanes, substituted p-menthane-carboxamides (e.g., N-ethyl-p-menthane-3-carboxamide (FEMA 3455)), acyclic carboxamides, substituted cyclohexanamides, substituted cyclohexane carboxamides, substituted ureas and sulphonamides, and substituted menthanols (all from Wilkinson Sword); hydroxymethyl and hydroxyethyl derivatives of p-menthane (from Lever Bros.); menthyl succinate; 2-mercapto-cyclo-decanone (from International Flavors and Fragrances); 2-isopropanyl-5-methylcyclohexanol (from Hisamitsu Pharmaceuticals, hereinafter "isopregol"); hydroxycarboxylic acids with 2-6 carbon atoms; menthone glycerol ketals (FEMA 3807, tradename FRESCOLAT(TM) type MGA); 3-I-menthoxypropane-1,2-diol (from Takasago, FEMA 3784, (hereinafter "TCA")); menthyl lactate; (from Haarman & Reimer, FEMA 3748, tradename FRESCOLAT(TM) type ML). These and other suitable cooling agents are further described in the following U.S. patents, U.S. Pat. Nos. 4,230,688 and 4,032,661 to Rowsell et al.; 4,459,425 to Amano et al.; 4,136,163 to Watson et al.; and 5,266,592 to Grub et al. The cooling agents are typically present in amounts of about 0.001 to about 10% by weight of the uncoated chewing gum.

Useful warming agents may be selected from a wide variety of compounds known to provide the sensory signal of warming to the user. These compounds offer the perceived sensation of warmth, particularly in the oral cavity, and often enhance the perception of flavours, sweeteners and other organoleptic components. Among the useful warming compounds included are vanillyl alcohol n-butylether (TK-1000) supplied by Takasago Perfumary Company Limited, Tokyo, Japan, vanillyl alcohol n-propylether, vanillyl alcohol isopropylether, vanillyl alcohol isobutylether, vanillyl alcohol n-aminoether, vanillyl alcohol isoamyleather, vanillyl alcohol n-hexyleather, vanillyl alcohol methylether, vanillyl alcohol ethyleather, gingerol, shogaol, paradol, zingerone, capsaicin, dihydrocapsaicin, nordihydrocapsaicin, homocapsaicin, homodihydrocapsaicin, ethanol, isopropol alcohol, iso-amylalcohol, benzyl alcohol, glycerine, and combinations thereof. Furthermore, useful warming agents include capsicum and nicotinate esters, such as benzyl nicotinate.

Colouring agents may be used in amounts effective to produce the desired colour. The colouring agents may include pigments which may be incorporated in amounts up to about 6%, by weight of the uncoated chewing gum. For example, titanium dioxide may be incorporated in amounts up to about 2% and preferably less than about 1%, by weight of the uncoated chewing gum. The colourants may also include natural food colours and dyes suitable for food, drug and cosmetic applications. These colourants are known as F.D.& C. dyes and lakes. The materials acceptable for the foregoing uses are preferably watersoluble. Illustrative nonlimiting examples include the indigoid dye known as F.D.& C. Blue No. 2, which is the disodium salt of 5,5-indigotindisulfonic acid. Similarly, the dye known as F.D.& C. Green No. 1 comprises a triphenylmethane dye and is the monosodium salt of 4-[4-(N-ethyl-p-sulfoniumbenzylamino) diphenylmethylene]-[1-(N-ethyl-N-p-sulfoniumbenzyl)-delta-2,5-cyclohexadieneimine]. A full recitation of all F.D.& C. colourants and their corresponding chemical structures may be found in the Kirk-Othmer Encyclopedia of Chemical Technology, 3rd Edition, in volume 5 at pages 857-884,

In a useful embodiment, the chewing gum further comprise an active ingredient, such as zinc, calcium carbonate, baking soda, dicalcium phosphate, fluor, xylitol, carbamide, and polyphenoler.

In an embodiment of the invention, the chewing gum comprises a first layer of compressed chewing gum. The chewing gum may further comprise a second layer of a compressed composition substantially free of gum base. The chewing gum may furthermore comprise a further layer of a compressed chewing gum. Compressed chewing gum in single, dual or multiple layers is well-known to the person skilled in the art, and is e.g. described in WO 2004/068 964, WO 2004/004480, and WO 2004/004 479.

In an embodiment of the invention, the chewing gum comprises a center filling.

Furthermore, the chewing gum may be processed into in a number of different shapes such as a stick, a core, a tablet, a slab a bead, a pellet, a tape, or a ball.

Under some circumstances it may be appropriate to coat the chewing gum according to the invention. Thus, in a useful embodiment, the chewing gum furthermore comprises a coating such as a hard coating, a soft coating or a film coating.

The chewing gum comprises the coating in an amount in the range of 1-80% by weight of the coated chewing gum, such as in an amount in the range of 10-50%, or 15-45% by weight of the chewing gum. Preferably, the chewing gum comprises the coating in an amount in the range of 20-40% by weight of the chewing gum.

The coating may be a hard coating, which term is used in the conventional meaning of that term including sugar coatings and sugar-free (or sugarless) coatings and combinations thereof. The objects of hard coating are to obtain a sweet, crunchy layer, which is appreciated by the consumer, and to protect the composition for various reasons. In a typical process of providing the composition with a protective sugar coating the gum centers are successively treated in suitable coating equipment with aqueous solutions of crystallizable sugar such as sucrose or dextrose, which, depending on the stage of coating reached, may contain other functional ingredients, e.g. fillers, colours, etc. In the present context, the sugar coating may contain further functional or active compounds including flavour compounds, pharmaceutically active compounds and/or polymer degrading substances.

In the production of chewing gums it may, however, be preferred to replace the cariogenic sugar compounds in the coating by other, preferably crystallizable, sweetening compounds that do not have a cariogenic effect. In the art such coating is generally referred to as sugarless or sugar-free coatings. Presently preferred non-cariogenic hard coating substances include polyols, e.g. sorbitol, maltitol, mannitol, xylitol, erythritol, lactitol, isomalt and tagatose which are obtained by industrial methods by hydrogenation of D-glucose, maltose, fructose or levulose, xylose, erythrose, lactose, isomaltulose and D-galactose, respectively.

In a typical hard coating process, a syrup containing crystallizable sugar and/or polyol is applied onto the chewing gum and the water it contains is evaporated off by blowing with warm, dry air. This cycle may be repeated several times, typically 10 to 80 times, in order to reach the swelling required. The term "swelling" refers to the increase in weight of the products, as considered at the end of the coating operation by comparison with the beginning, and in relation to the final weight of the coated chewing gum.

Alternatively, the coating may be a soft coating. Such a soft coating is applied using conventional methods and may advantageously consist of a composition of a sugar or any of the above non-cariogenic, sugar-less sweetening compounds and a starch hydrolysate.

In a preferred embodiment of the invention, the chewing gum comprises a film coating. The film coating may be obtained by subjecting the composition to a film coating process and which therefore comprises one or more film-forming polymeric agents and optionally one or more auxiliary compounds, e.g. plasticizers, pigments and opacifiers. A film coating is a thin polymer-based coating applied to a composition of any of the above forms. The thickness of such a film coating is usually between 20 and 100 µm Generally, the film coating is obtained by passing the composition through a spray zone with atomized droplets of the coating materials in a suitable aqueous or organic solvent vehicle, after which the material adhering to the composition is dried before the next portion of coating is received. This cycle is repeated until the coating is complete.

In the present context, suitable film-coating polymers include edible cellulose derivatives such as cellulose ethers including methylcellulose (MC), hydroxyethyl cellulose (HEC), hydroxypropyl cellulose (HPC) and hydroxypropyl methylcellulose (HPMC). Other useful film-coating agents are acrylic polymers and copolymers, e.g. methylacrylate aminoester copolymer or mixtures of cellulose derivatives and acrylic polymers. A particular group of film-coating polymers also referred to, as functional polymers are polymers that, in addition to its film-forming characteristics, confer a modified release performance with respect to active components of the chewing gum formulation. Such release modifying polymers include methylacrylate ester copolymers, ethylcellulose (EC) and enteric polymers designed to resist the acidic stomach environment, yet dissolve readily in the duodenum. The latter group of polymers includes: cellulose acetate phtalate (CAP), polyvinyl acetate phtalate (PVAP), shellac, metacrylic acid copolymers, cellulose acetate trimellitate (CAT) and HPMC. It will be appreciated that the outer film coating according to the present invention may comprise any combination of the above film-coating polymers.

In other embodiments of the invention, the film-coating layer of the chewing gum comprise a plasticizing agent having the capacity to alter the physical properties of a polymer to render it more useful in performing its function as a film forming material. In general, the effect of plasticizers will be to make the polymer softer and more pliable as the plasticizer molecules interpose themselves between the individual polymer strands thus breaking down polymer-polymer interactions. Most plasticizers used in film coating are either amorphous or have very little crystallinity.

In the present context, suitable plasticizers include polyols such as glycerol, propylene glycol, polyethylene glycol, e.g. the 200-6000 grades hereof, organic esters such as phtalate esters, dibutyl sebacate, citrate esters and thiacetin, oils/glycerides including castor oil, acetylated monoglycerides and fractionated coconut oil.

The choice of film-forming polymer (s) and plasticizing agent (s) for the film coating of the composition is made with due consideration for achieving the best possible barrier properties of the coating in respect of dissolution and diffusion across the film of moisture and gasses.

The film coating of the chewing gum may also contain one or more colorants or opacifiers. In addition to providing a desired colour hue, such agents may contribute to protecting the compressed gum base against pre-chewing reactions, in particular by forming a barrier against moisture and gasses. Suitable colorants/opacifiers include organic dyes and their lakes, inorganic colouring agents, e.g. titanium oxide and natural colours such as e.g. beta-carotene.

Additionally, film coatings may contain one or several auxiliary substances such as flavours and waxes or saccharide compounds such as polydextrose, dextrins including maltodextrin, lactose, modified starch, a protein such as gelatine or zein, a vegetable gum and any combination thereof.

The coating, in general, typically comprises one or more layers. For example the number of layers of the coating may be in the range of 1-100 layers, such as 3-75 layers, 10-60 layers, and 20-40 layers.

The coating comprises for example comprise a wax layer. In an embodiment of the invention, the outermost layer of the coating is a wax layer.

In a preferred embodiment of the present invention, the compressed chewing gum furthermore comprises a coating.

In another preferred embodiment, the chewing gum does not comprise a coating.

A chewing gum according to the present invention, has typically a weight in the range of 0.1-10 g, such as in the range of 0.5-5 g or in the range of 0.75-2.5 g, preferably in the range of 0.8-2 g, and even more preferred in the range of 1-1.5 g. Center filled chewing gums normally have weights in the range of 0.5-5 g, preferably in the range of 1-4 g, and even more preferred in the range of 2-3 g. Typical weights for bead shaped chewing gums are in the range of 0.1-0.6 g, preferably in the range of 0.2-0.5 g, and even more preferred in the range of 0.3-0.4 g.

It should be understood' that any embodiments and/or feature discussed above in connection with the chewing gum according to the invention apply by analogy to the below aspects of the present invention.

A further aspect of the invention relates to a method of preparing the chewing gum according to the present invention. The method comprises the steps of mixing the at least one chewing gum ingredient, gum base, and nut pieces; shaping the mix to obtain the chewing gum; and, optionally, coating the chewing gum.

The method may be performed as a batch process. Alternatively it may be performed as a continuous process.

The method for the preparation of the chewing gum according to the invention may comprise the following:
Mixing of the above described conventional chewing gum components in kneading kettles (mixers) with strong horizontally placed Z-shaped arms, which processes the raw materials and produces a homogeneous gum mass.

The kneading kettles are heated to a temperature of 30-80°C, typically approx. 45°C. The mixing process starts with gum base quantities that have been weighed out, and the processing of these lasts for 1-20 minutes, typically approx. 10 minutes. Then one or more sweetener(s) in powder form or in liquid form may be added to the mixture. The dosage of sweeteners and the following processing last from 1 to 20 minutes, typically approx. 7 minutes.

In an embodiment of the method according to the invention, the nut pieces are applied to the mixture after the gum base has been mixed with the at least one chewing gum ingredient, e.g. a bulk sweetener. It is preferred that the temperature of the gum base is at most 70°C, and even more preferred at most 65°C, when the nut pieces are mixed with the gum base. Further chewing gum ingredients such as flavours may be added. Subsequently, the mixture is kneaded for a further 1 to 10 minutes, typically approx. 5 minutes. The admixture of nut pieces, flavours and the remaining components may also take place in the beginning of the kneading process, i.e. before the admixture of the sweeteners. It is also possible to add nut pieces and flavours in two or more portions during the kneading process.

When the kneading is completed, the kneading kettle is tipped, and the gum mass is taken out into carts, or onto trays

The next process is the forming of the chewing gum. Before the forming can take place, the chewing gum mass, however, must be cooled. When taken out from the kneading kettle, the chewing gum mass has a temperature of 50-70°C, and in order to form the chewing gum, the temperature must be reduced to 30-45°C. The cooling of the chewing gum either takes place by storing the chewing gum mass in certs or on trays for quite a long time or by transporting a thin chewing gum carpet through a cooling tunnel.

The forming of the chewing gum may take place by extrusion through a specially formed nozzle, or the chewing gum may be formed after extrusion by means of rollers, punching machines, or tentering wheels. The chewing gum may be formed into a stick, a core, a tablet, a slab, a bead, a pellet, a tape, or a ball.

In order to prevent the chewing gum from sticking to the rollers and other tools, the chewing gum is frequently powdered with a powder, which may consist of i.e. icing sugar, talc, or corn flour.

The formed chewing gum can be cooled immediately to room temperature in a cooling tunnel and be packed (especially in case of bubble gum and soft bubble gum), or the cooling may take place on trays at the store for semimanufactured products at a controlled temperature and moisture.

If desired, the formed and cooled chewing gum is then treated by means coating and polishing processes before the packing.

The coating of cores takes place in tilted, round or horizontally placed cylindrical coating kettles that rotate during the whole process. The coating kettles are made from copper, stainless steel, or fiberglass-reinforced polyester, and are often equipped with a piping system that supplies and exhausts air and doses the coating suspension.

In a useful embodiment, the coating process comprises the following. Cores of chewing gum put into movement in rotating coating kettles are added to the coating suspension in small portions that disperse evenly over the surfaces of the cores after a short or long smoothing out time. The smoothing out time is the period of time during which the suspension disperses over the cores, approx. 10-90 seconds, preferably approx. 30-60 seconds. Afterwards the cores are dried by means of air. The operation is repeated up to 90 times, preferably approx. 30-40 times, until the cores are completely covered and have the preferred measure and the preferred weight.

In order to ease the coating process of chewing gum, a suspension is used which is heated up to 75°C, and air which is heated up to approx. 40°C.

Between the dosages of the coating suspension, one or more active substance(s) in solid form is/are added in one or more increment(s) in order to provide the chewing gum with a fast effect, e.g. flavour release during the chewing.

Furthermore, between the dosages of the coating suspension and the addition of one or more active substance(s) in solid form, one or more active substance(s) in liquid form may be added.

In order to achieve a neat and smooth surface of the chewing gum tablets with the completed coating, these may subsequently be subjected to a polishing. The polishing also takes place in rotating coating kettles in which a polishing suspension or a polishing powder is added to the coated cores in one or more portion(s). The polishing suspension often consists of wax, emulsifier, shellac, gum arabic, water, etc. The polishing powder often consists of wax only, or of wax mixed with emulsifier, gum arabic or talc, etc.

A further aspect of the present invention relates to the use of nut pieces as a softener in chewing gum, wherein at least the content of fat in the nut pieces is essentially similar to the content of fat in the nut from which it has been obtained. The present inventors found that the nut pieces described above have an excellent effect on the texture of the gum base. Thus, the use of nuts as a gum base softener is a natural alternative to the traditionally synthetic softener.

The amount of nut pieces used in the chewing gum as a softener is in the range 10% to 50% by weight of the uncoated chewing gum.

### EXAMPLE

Chewing gums containing different kinds of nut pieces

### 1.1 Materiel and methods

A chewing gum was prepared using a gum base containing about 15% by weight elastomer, about 20% by weight natural resin, about 20% by weight PVA, about 20% by weight filler, about 5% emulsifier, and about 20% weight fat.

The gum base was ground with some of the sorbitol powder in a Z-arm mixer at a temperature in the range of 60-65°C. The nuts were ground in a coffee mill resulting in pieces having a size in the range of 5-3000 µm. Subsequently, the nut pieces and the remaining components were added to and mixed into the mixture. The mixture was then shaped into a chewing gum with an average weight of about 1 g. Table 1.1 shows the raw materials used in the chewing gum.

**Table 1.1 Chewing gum comprising almond pieces**

| **Raw material** | **Content %** |
|---|---|
| Gumbase | 40-60% |
| Sorbitol | 35-40% |
| Maltitol syrup | 4-5% |
| Flavour | 2-3% |
| Acesulfame | 0,1-0.2% |
| Aspartame | 0.1-0.2% |
| Almonds pieces | 10-12% |

### 1.2 Evaluation bv a sensory panel comprising of 5 members, every member chewed minimum 2 times 2 pieces

Five test persons were chewing the chewing gum comprising almonds. Every test person was chewing minimum 2 times on two chewing gums.

The test person found that the texture was very good, it was not soft or sticky. The chewing gum had a smooth, soft texture, and it still binds together all the ingredients. It still has an elastic chewing texture .The gum base does not loose its volume, hence some of the nuts stays in the gum base. The test persons were able to taste the almonds in a small amount.

### 1.3. Chewing gums comprising different kinds of nut pieces

Based on the above test result, seven hypothetical chewing gums comprising different types of nut pieces and/or different contents of nut pieces are listed in the following tables 1.2-1.7.

**Table 1.2 Chewing gum comprising 10-12% hazelnut pieces**

| **Raw material** | **Content %** |
|---|---|
| Gumbase | 40-60% |
| Sorbitol | 35-40% |
| Maltitol syrup | 4-5% |
| Flavour | 2-3% |
| Acesulfame | 0.1-0.2% |
| Aspartame | 0.1-0.2% |
| Hazelnuts pieces | 10-12% |

**Table 1.3 Chewing gum comprising 12-15% hazelnut pieces**

| **Raw material** | **Content %** |
|---|---|
| Gumbase | 40-55% |
| Sorbitol | 30-35% |
| Maltitol syrup | 4-5% |
| Flavour | 2-3% |
| Acesulfame | 0.1-0.2% |
| Aspartame | 0.1-0.2% |
| Hazelnuts | 12-15% |

**Table 1.4 Chewing gum comprising 18-22% hazelnut pieces**

| **Raw material** | **Content %** |
|---|---|
| Gumbase | 45-55% |
| Sorbitol | 20-30% |
| Flavour | 2-3% |
| Acesulfame | 0.1-0.2% |
| Aspartame | 0.1-0.2% |
| Hazelnuts | 18-22% |

**Table 1.4 Chewing gum comprising 12-15% cashew pieces**

| **Raw material** | **Content %** |
|---|---|
| Gumbase | 40-60% |
| Sorbitol | 35-40% |
| Flavour | 2-3% |
| Acesulfame | 0.1-0.2% |
| Aspartame | 0.1-0.2% |
| Cashews pieces | 12-15% |

**Table 1.5 Chewing gum comprising 15-20% peanuts pieces**

| **Raw material** | **Content %** |
|---|---|
| Gumbase | 40-50% |
| Sorbitol | 20-30% |
| Flavour | 2-3% |
| Acesulfame | 0.1-0.2% |
| Aspartame | 0.1-0.2% |
| Peanuts pieces | 15-20% |

**Table 1.6 Chewing gum comprising 20-25% walnuts pieces**

| **Raw material** | **Content %** |
|---|---|
| Gumbase | 40-50% |
| Sorbitol | 20-25% |
| Flavour | 2-3% |
| Acesulfame | 0.1-0.2% |
| Aspartame | 0.1-0.2% |
| Walnuts pieces | 20-25% |

**Table 1.7 Chewing gum comprising 30-40% Macadamia pieces**

| **Raw material** | **Content %** |
|---|---|
| Gumbase | 30-45% |
| Sorbitol | 20-25% |
| Flavour | 2-3% |
| Acesulfame | 0.1-0.2% |
| Aspartame | 0.1-0.2% |
| Macadamias pieces | 30-40% |

## Claims

1. A chewing gum comprising
- at least one chewing gum ingredient,
- gum base in the range of 20-70% by weight of the uncoated chewing gum, and
- nut pieces in an amount of 10% to 50% by weight of the uncoated chewing gum,
wherein the nut pieces are obtained from a non-euphoriant nut, and
wherein the nut pieces have an average size of at least 750 µm, and
wherein at least the content of fat in the nut pieces deviates at the most 10% from the normal content of fat in the nut from which it has been obtained.

2. The chewing gum according to claim 1, wherein the content of water, protein and carbohydrate in the nut pieces deviates at the most 10% from the normal content range of water, protein and carbohydrate in the nut from which it has been obtained.

3. The chewing gum according to any of the preceding claims, wherein the nut, from which the nut pieces have been obtained, is selected from the group consisting of an almond, a hazelnut, a walnut, a pecan nut, a peanut, and a macadamia nut, or a mixture thereof.

4. The chewing gum according to any of the preceding claims, wherein the nut, from which the nut pieces have been obtained, does not undergo additional substantial processing except from comminution.

5. The chewing gum according to any of the preceding claims, further comprising a high intensity sweetener.

6. The chewing gum according to any of the preceding claims, further comprising an active ingredient selected from the group consisting of zinc, calcium carbonate, baking soda, dicalcium phosphate, fluor, xylitol, carbamide, and polyphenol.

7. The chewing gum according to any of the preceding claims, the chewing gum further comprising a coating.

8. A method of preparing a chewing gum according to any of claims 1-7, comprising the steps of mixing the at least one chewing gum ingredient, gum base in the range of 20-70% by weight of the uncoated chewing gum, and nut pieces in an amount of 10% to 50% by weight of the uncoated chewing gum; shaping the mix to obtain the chewing gum, wherein at least the content of fat in the nut pieces deviates at the most 10% from the normal content of fat in the nut from which it has been obtained, and wherein the nut pieces have an average size of at least 750 µm.

9. Use of non-euphoriant hut pieces in an amount of 10% to 50% by weight of the uncoated chewing gum as a softener in chewing gum comprising gum base in the range of 20-70% by weight of the uncoated chewing gum, wherein at least the content of fat in the nut pieces deviates at the most 10% from the normal content of fat in the nut from which it has been obtained, and wherein the nut pieces have an average size of at least 750 µm.

## Patentansprüche

1. Kaugummi, umfassend
- mindestens einen Kaugummibestandteil,
- Kaugummigrundmasse im Bereich von 20 bis 70 Gew.-% des nicht überzogenen Kaugummis und
- Nussstücke in einer Menge von 10 bis 50 Gew.-% des nicht überzogenen Kaugummis,
wobei die Nusstücke von einer nicht euphorisierenden Nuss stammen und
wobei die Nussstücke eine durchschnittliche Größe von mindestens 750 µm aufweisen und
wobei mindestens der Fettgehalt in den Nussstücken höchstens 10 % von dem normalen Fettgehalt in der Nuss, von der sie stammen, abweicht.

2. Kaugummi nach Anspruch 1, wobei der Gehalt an Wasser, Protein und Kohlenhydrat in den Nussstücken höchstens 10 % von dem normalen Gehaltsbereich an Wasser, Protein und Kohlenhydrat in der Nuss, von der sie stammen, abweicht.

3. Kaugummi nach einem der vorhergehenden Ansprüche, wobei die Nuss, von der die Nussstücke stammen, ausgewählt ist aus der Gruppe, bestehend aus einer Mandel, einer Haselnuss, einer Walnuss, einer Pekannuss, einer Erdnuss und einer Macadamianuss oder einer Mischung davon.

4. Kaugummi nach einem der vorhergehenden Ansprüche, wobei die Nuss, von der die Nussstücke stammen, außer einer Zerkleinerung keiner weiteren wesentlichen Verarbeitung unterworfen wird.

5. Kaugummi nach einem der vorhergehenden Ansprüche, weiterhin umfassend einen Süßstoff mit erhöhter Süßkraft.

6. Kaugummi nach einem der vorhergehenden Ansprüche, weiterhin umfassend einen Wirkstoff, der ausgewählt ist aus der Gruppe, bestehend aus Zink, Calciumcarbonat, Natriumhydrogencarbonat, Dicalciumphosphat, Fluor, Xylitol, Carbamid und Polyphenol.

7. Kaugummi nach einem der vorhergehenden Ansprüche, wobei das Kaugummi weiterhin einen Überzug umfasst.

8. Verfahren zur Herstellung eines Kaugummi nach einem der Ansprüche 1-7, umfassend die Schritte des Mischens des mindestens einen Kaugummibestandteils, der Kaugummigrundmasse im Bereich von 20 bis 70 Gew.-% des nicht überzogenen Kaugummis und Nusstücken in einer Menge von 10 bis 50 Gew.-% des nicht überzogenen Kaugummis; Formen des Gemisches zum Erhalt des Kaugummis, wobei mindestens der Fettgehalt in den Nussstücken höchstens 10 % von dem normalen Fettgehalt in der Nuss, von der sie stammen, abweicht und wobei die Nussstücke eine durchschnittliche Größe von mindestens 750 µm aufweisen.

9. Verwendung von nicht euphorisierenden Nusstücken in einer Menge von 10 bis 50 Gew.-% des nicht überzogenen Kaugummis als Weichmacher in einem Kaugummi, umfassend Kaugummigrundmasse im Bereich von 20 bis 70 Gew.-% des nicht überzogenen Kaugummis, wobei mindestens der Fettgehalt in den Nussstücken höchstens 10 % von dem normalen Fettgehalt in der Nuss, von der sie stammen, abweicht und wobei die Nussstücke eine durchschnittliche Größe von mindestens 750 µm aufweisen.

## Revendications

1. Gomme à mâcher comprenant
- au moins un ingrédient pour gomme à mâcher,
- une base de gomme représentant 20 à 70 % en poids de la gomme à mâcher non enrobée, et
- des morceaux de fruit à coque en quantité représentant 10 à 50 % en poids de la gomme à mâcher non enrobée,
dans laquelle les morceaux de fruit à coque proviennent d'un fruit à coque non euphorisant, et
dans laquelle les morceaux de fruit à coque présentent une taille moyenne d'au moins 750 µm, et
dans laquelle au moins la teneur en matière grasse des morceaux de fruit à coque diffère au plus de 10% de la teneur normale en matière grasse du fruit à coque dont ils proviennent.

2. La gomme à mâcher selon la revendication 1, dans laquelle la teneur en eau, en protéines et en glucides des morceaux de fruit à coque diffère au plus de 10% de la plage normale de teneurs en eau, en protéines et en glucides du fruit à coque dont ils proviennent.

3. La gomme à mâcher selon l'une quelconque des revendications précédentes, dans laquelle le fruit à coque dont proviennent les morceaux de fruit à coque est choisi dans le groupe consistant en amande, noisette, noix, noix de pécan, arachide et noix de macadamia, ou un mélange de celles-ci.

4. La gomme à mâcher selon l'une quelconque des revendications précédentes, dans laquelle le fruit à coque dont proviennent les morceaux de fruit à coque ne subit aucune transformation supplémentaire substantielle à l'exception du broyage.

5. La gomme à mâcher selon l'une quelconque des revendications précédentes, comprenant également un édulcorant intense.

6. La gomme à mâcher selon l'une quelconque des revendications précédentes, comprenant également un ingrédient actif choisi dans le groupe consistant en zinc, carbonate de calcium, bicarbonate de sodium, phosphate bicalcique, fluor, xylitol, carbamide et polyphénol.

7. La gomme à mâcher selon l'une quelconque des revendications précédentes, la gomme à mâcher comprenant également un enrobage.

8. Méthode de préparation d'une gomme à mâcher selon l'une quelconque des revendications 1 à 7, comprenant les étapes de mélange de l'au moins un ingrédient pour gomme à mâcher, de la base de gomme représentant 20 à 70 % en poids de la gomme à mâcher non enrobée et des morceaux de fruit à coque en quantité représentant 10 à 50 % en poids de la gomme à mâcher non enrobée ; de mise en forme du mélange pour obtenir la gomme à mâcher, dans laquelle au moins la teneur en matière grasse des morceaux de fruit à coque diffère au plus de 10 % de la teneur normale en matière grasse du fruit à coque dont ils proviennent, et dans laquelle les morceaux de fruit à coque présentent une taille moyenne d'au moins 750 µm.

9. Utilisation de morceaux d'un fruit à coque non euphorisant en quantité représentant 10 à 50 % en poids de la gomme à mâcher non enrobée comme ramollissant dans une gomme à mâcher comprenant une base de gomme représentant 20 à 70 % en poids de la gomme à mâcher non enrobée, dans laquelle au moins la teneur en matière grasse des morceaux de fruit à coque diffère au plus de 10% de la teneur normale en matière grasse du fruit à coque dont ils proviennent, et dans laquelle les morceaux de fruit à coque présentent une taille moyenne d'au moins 750 µm.
